# EUROPEAN PATENT APPLICATION

(11) **EP 4 841 220 A1**
(43) Date of publication of application: **18.11.2026**
(21) Application number: 24939323.2
(22) Date of filing: 30.07.2024
(51) Int. Cl.: G01G 23/00, B65G 47/90, H01M 50/609

(54) **WEIGHING DEVICE, WEIGHING SYSTEM AND PRODUCTION LINE**

(30) Priority: 24.05.2024 CN 202421154461 U
(71) Applicant: Contemporary Amperex Technology Co., Limited, Ningde, Fujian 352100 (CN); CONTEMPORARY AMPEREX RUNZHI SOFTWARE TECHNOLOGY LIMITED, Ningde, Fujian 352100 (CN)
(72) Inventor: LIAO, Tongzhang, Ningde, Fujian 352100 (CN); LIAO, Hongyan, Ningde, Fujian 352100 (CN); YANG, Xielin, Ningde, Fujian 352100 (CN); HUANG, Chen, Ningde, Fujian 352100 (CN)
(74) Representative: Kraus & Lederer PartGmbB
(86) International application number: PCT/CN2024/108591
(87) International publication number: WO 2025/241304

(57) **Abstract**

A weighing device (11). The weighing device (11) is configured to weigh workpieces (12), and comprises a weighing assembly (111), gripping members (112) and a first translation assembly (113). The weighing assembly (111) comprises an operation surface (a), and the operation surface (a) comprises loading stations (a1), weighing stations (a2) and unloading stations (a3) which are arranged in sequence. The weighing assembly (111) comprises a frame (1111) and a weighing portion (1112), wherein the loading stations (a1) and the unloading stations (a3) are located on the frame (1111), the weighing portion (1112) is arranged in the frame (1111), the weighing stations (a2) are located on the weighing portion (1112), and the weighing stations (a2) are configured to weigh the workpieces (12). The gripping members (112) are arranged above the operation surface (a), and can translate in a plane parallel to the operation surface (a) and can pass above the loading stations (a1), the weighing stations (a2) and the unloading stations (a3); and the gripping members (112) are configured to grip or release the workpieces (12). The first translation assembly (113) is arranged on the weighing assembly (11) and is configured to drive the gripping members (112) to translate. Further disclosed are a weighing system (1) and a production line.

## Description

### CROSS-REFERENCE TO RELATED APPLICATIONS

The present disclosure is based on and claims priority to Chinese Patent Application 202421154461.X, filed on May 24, 2024 and entitled "WEIGHING DEVICE, WEIGHING SYSTEM AND PRODUCTION LINE", which is incorporated herein by reference in its entirety.

### TECHNICAL FIELD

The present disclosure relates to the field of battery weighing technologies, and in particular, to a weighing device, a weighing system and a production line.

### BACKGROUND

New energy batteries are increasingly widely used in life and industry. Consequently, efficient production of new energy batteries is becoming increasingly important. During a battery production process, it is required to inject liquid into the battery. To improve the accuracy of liquid injection, a typical method is to provide a battery weighing device to weigh the battery before and after liquid injection.

In the related art, a battery weighing device typically includes an electronic scale and a gripper that can move up and down and translate. The gripper picks up a battery at a loading position, moves up, translates to above the electronic scale, moves down, and places the battery on the electronic scale for weighing. After the weighing is completed, the gripper picks up the battery again, moves up, translates the battery to an unloading position, moves down, and then releases the battery, thereby completing the weighing of the battery.

Because the gripper needs to move up and down at the electronic scale, which involve excessive actions, resulting in slow cycle and low weighing efficiency in the entire weighing process.

### SUMMARY

To resolve the foregoing technical problem, the present disclosure provides a weighing device, a weighing system and a production line, to improve battery weighing efficiency.

The present disclosure is implemented through the following technical solutions.

A first aspect of the present disclosure provides a weighing device, configured to weigh workpieces. The weighing device includes a weighing assembly, a gripping member and a first translation assembly. The weighing assembly includes an operation surface. The operation surface includes a loading station, a weighing station and an unloading station which are arranged in sequence. The weighing assembly includes a frame and a weighing portion. The loading station and the unloading station are located on the frame. The weighing portion is arranged in the frame. The weighing station is located on the weighing portion. The weighing station is configured to weigh the workpieces. The gripping member is arranged above the operation surface, is capable of translating in a plane parallel to the operation surface and is capable of passing above the loading station, the weighing station and the unloading station. The gripping member is configured to grip and release the workpieces. The first translation assembly is arranged on the weighing assembly and configured to drive the gripping member to translate.

In the technical solution of the embodiments of the present disclosure, to weigh the workpiece, the first translation assembly drives the gripping member to translate to the loading station, grips a to-be-weighed workpiece at the loading station, then translates to above the weighing station and releases the workpiece. In this case, the weighing station can weigh the workpiece. After the weighing is completed, the gripping member grips the workpiece again, continues to translate to the unloading station and releases the workpiece. In this way, the workpiece is weighed.

In the entire weighing process, the gripping member only translates between the loading station, the weighing station and the unloading station. Therefore, the entire weighing process involves simple movements and fast beat, thereby improving the weighing efficiency.

In addition, because the periphery of the frame is hollow, the weighing portion is arranged in the frame, and when maintenance, replacement, or the like needs to be performed on the weighing portion, the operation such as maintenance or replacement may be performed on the weighing portion by using the hollow structure, thereby facilitating operations.

In some embodiments of the present disclosure, a translation direction of the gripping member is consistent with an arrangement direction of the loading station, the weighing station and the unloading station.

In this way, a translation route of the gripping member is relatively short, so that the weighing cycle can be further accelerated, and the weighing efficiency can be improved.

In some embodiments of the present disclosure, the weighing device includes a second translation assembly and a calibration member. The second translation assembly is connected to both the first translation assembly and the gripping member. The calibration member is connected to the second translation assembly. In the plane parallel to the operation surface, the second translation assembly is configured to drive the calibration member and the gripping member to translate such that the calibration member or the gripping member is aligned with the weighing station.

The second translation assembly is used to connect the gripping member to the first translation assembly. In this way, the second translation assembly and the gripping member can both be driven by the first translation assembly to translate. Because the calibration member is connected to the second translation assembly, the second translation assembly can drive the calibration member and the gripping member to translate. When the gripping member is aligned with the weighing station, the workpiece on the gripping member can be in contact with the weighing station. In this way, the workpiece can be weighed. When the calibration member is aligned with the weighing station, the calibration member can be in contact with the weighing station, so as to calibrate the weighing station.

The calibration member adds a calibration function to the weighing device, thereby facilitating calibration of the weighing station.

In some embodiments of the present disclosure, a plurality of weighing stations, a plurality of gripping members and a plurality of calibration members are provided. The plurality of workpieces and the plurality of calibration members are all connected to the second translation assembly and are alternately arranged along a translation direction of the second translation assembly.

By providing the plurality of gripping members and the plurality of weighing stations, the plurality of workpieces can be weighed at the same time, thereby improving the weighing efficiency. Moreover, the plurality of calibration members are arranged to calibrate the plurality of weighing stations at the same time, thereby improving the calibration efficiency.

In some embodiments of the present disclosure, the translation direction of the second translation assembly is perpendicular to the arrangement direction of the loading station, the weighing station and the unloading station.

In this way, a space between the loading station and the unloading station can be reduced, and a size of the weighing device in the direction of the loading station and the unloading is can be reduced, thereby improving the space utilization.

In some embodiments of the present disclosure, the weighing device further includes a lifting assembly. The lifting assembly is connected to both the first translation assembly and the second translation assembly to make the second translation assembly connected to the first translation assembly, and is configured to drive the second translation assembly to move up and down.

By providing the lifting assembly, the lifting assembly can move with the first translation assembly, and the lifting assembly can also drive the second translation assembly to move up and down. Because the gripping member is connected to the second translation assembly, the gripping member can move up and down. Therefore, the gripping member can move up and down and translate.

In this way, after placing the weighed workpiece to the unloading station, the gripping member can move up and then translate to above the loading station. In this way, when a workpiece arrives at the loading station, collision between the gripping member and the workpiece at the loading station can be avoided.

In some embodiments of the present disclosure, a lifting direction of the second translation assembly is perpendicular to a plane of the operation surface.

In this way, the lifting distance of the gripping member is shortest, so that the weighing cycle can be accelerated, and the weighing efficiency can be improved.

In some embodiments of the present disclosure, the calibration member includes a connection portion and a standard portion. The connection portion is connected to the second translation assembly. The connection portion has a sliding space extending along the lifting direction of the second translation assembly. The standard portion is partially located in the sliding space and is slidable along an extension direction of the sliding space. The standard portion is alignable with the weighing station.

Because the standard is also arranged on the second translation assembly, the standard can also move up and down with the second translation assembly. Because the standard portion is slidable along the sliding space, during the calibration of the weighing station, the standard portion is first made aligned with the weighing station, and then the standard portion is moved down. When the standard portion is in contact with the weighing station, the weighing station provides a support force for the standard portion, so that the standard portion slides away from the operation surface. In this case, no force is generated between the standard portion and the connection portion in the extension direction of the sliding space, and only the weight of the standard portion acts on the weighing station. Thereby, the weighing station is calibrated by using the standard portion. After the calibration is completed, the calibration portion is moved up. When the calibration portion is separated from the weighing station, the calibration portion moves down. Because the calibration portion is partially located in the sliding space, after the calibration portion moves down to some extent, the connection portion provides a constraint for the calibration portion, so as to prevent the calibration portion from completely sliding out of the sliding space. In the entire calibration process, the operation is simple, and the calibration precision is not affected.

In some embodiments of the present disclosure, the second translation assembly includes a first adapter plate, a second adapter plate and a first drive portion. The first adapter plate is connected to the first translation assembly. The second adapter plate is arranged between the first adapter plate and the operation surface and connected to both the calibration member and the gripping member. The first drive portion is connected to the first adapter plate and the second adapter plate and configured to drive the second adapter plate to translate in the plane parallel to the operation surface to make the calibration member or the gripping member aligned with the weighing station.

The second adapter plate is used to connect the gripping member and the calibration member, so that the gripping member and the calibration member can be connected to the second translation assembly, thereby facilitating structural arrangement.

In some embodiments of the present disclosure, in an arrangement direction of the gripping member and the calibration member, the first adapter plate is slidably connected to the second adapter plate.

The slidable connection between the first adapter plate and the second adapter plate improves the connection strength between the first adapter plate and the second adapter plate and the structural stability.

In some embodiments of the present disclosure, the first translation assembly includes a slide rail, a translation portion and a second drive portion. The slide rail is connected to the weighing assembly. An extension direction of the slide rail is consistent with the translation direction of the gripping member. The translation portion is located above the operation surface, forms a sliding fit with the slide rail, and is connected to the lifting assembly. The second drive portion is configured to drive the translation portion to slide.

The fit between the slide rail and the translation portion is used to implement translation, and the second drive portion is used to provide translation power. This facilitates connection and arrangement of the lifting assembly and improves the structural stability of the overall device.

A second aspect of the present disclosure provides a weighing system, including the weighing device in any one of the foregoing embodiments and a workpiece. The workpiece includes a body and a protection member. The protection member is at least partially located between a bottom of the body and an operation surface. The protection member is in contact with the operation surface during translation of the workpiece.

In the technical solution of the embodiments of the present disclosure, during translation, the protection member can protect the body, so as to prevent the body from directly contacting the operation surface, thereby protecting the workpiece from damage.

In some embodiments of the present disclosure, the protection member has a recess. An opening of the recess faces a side away from the operation surface. A part of the body extends into the recess. The part of the body forms a clearance fit with a peripheral wall surface of the recess.

This facilitates placement of the body into the recess and removal of the body from the recess, thereby facilitating actual operations.

A third aspect of the present disclosure provides a production line, including the weighing device in any one of the foregoing embodiments or the weighing system in any one of the foregoing embodiments, a loading conveyor and an unloading conveyor. A to-be-weighed workpiece enters the loading station by using the loading conveyor. The weighed workpiece leaves the unloading station by using the unloading conveyor.

In the technical solution of the embodiments of the present disclosure, the loading conveyor is used for loading, and the unloading conveyor is used for unloading, thereby implementing assembly-line production.

### BRIEF DESCRIPTION OF THE DRAWINGS

By reading the following detailed description of exemplary implementations, a person of ordinary skill in the art becomes clearly aware of various other advantages and benefits. The accompanying drawings are merely used for illustrating the exemplary implementations and are not intended to constitute a limitation on this application. In addition, in all the accompanying drawings, the same components are denoted by the same reference numerals. In the figures:
FIG. 1 is a schematic external structural view of a weighing system according to some embodiments of the present disclosure;
FIG. 2 is another schematic external structural view of the weighing system according to some embodiments of the present disclosure;
FIG. 3 is still another schematic external structural view of the weighing system according to some embodiments of the present disclosure;
FIG. 4 is a schematic external structural view of a gripping member according to some embodiments of the present disclosure;
FIG. 5 is a schematic partial enlarged view of A in FIG. 2;
FIG. 6 is a schematic external structural view of a workpiece according to some embodiments of the present disclosure;
FIG. 7 is yet another schematic external structural view of the weighing system according to some embodiments of the present disclosure;
FIG. 8 is a schematic external structural view of a second translation assembly, a plurality of gripping members and a plurality of calibration members according to some embodiments of the present disclosure;
FIG. 9 is another schematic external structural view of the second translation assembly, the plurality of gripping members and the plurality of calibration members according to some embodiments of the present disclosure;
FIG. 10 is still another schematic external structural view of the second translation assembly, the plurality of gripping members and the plurality of calibration members according to some embodiments of the present disclosure;
FIG. 11 is yet another schematic external structural view of the second translation assembly, the plurality of gripping members and the plurality of calibration members according to some embodiments of the present disclosure; and
FIG. 12 is a schematic sectional view of the calibration member according to some embodiments of the present disclosure.

### Description of reference numerals:

1-weighing system;
11-weighing device; a-operation surface; a1-loading station; a2-weighing station; a3-unloading station; 111-weighing assembly; 1111-frame; b-inner support frame; c-outer support frame; c1-first leg; c2-main body; c3-first conveyor belt; c4-second conveyor belt; 1112-weighing portion; 112-gripping member; 1121-angle cylinder; 1122-clamping plate; 113-first translation assembly; 1131-slide rail; 1132-translation portion; 1133-second drive portion; 114-second translation assembly; 1141-first adapter plate; 1142-second adapter plate; 1143-first drive portion; 115-calibration member; 1151-connection portion; d-first abutting portion 1152-standard portion; e-second abutting portion; 116-lifting assembly; 117-guide rod;
12-workpiece; 121-body; 122-protection member; and 1221-recess.

### DETAILED DESCRIPTION

The following describes in detail embodiments of technical solutions of the present disclosure with reference to the accompanying drawings. The following embodiments are merely used to describe technical solutions of the present disclosure more explicitly, and therefore they are merely used as examples and do not constitute a limitation to the protection scope of the present disclosure.

Unless otherwise defined, meanings of all technical and scientific terms used in this specification are the same as those usually understood by a person skilled in the art to which the present disclosure belongs. The terms used herein are merely for the purpose of describing specific embodiments, but are not intended to limit the present disclosure. The terms "include/comprise" and "have" and any variations thereof in the specification and the BRIEF DESCRIPTION OF THE DRAWINGS of the present disclosure are intended to cover non-exclusive inclusions.

In descriptions of embodiments of the present disclosure, the terms "first", "second", "third", and the like are merely intended to distinguish between different objects, and shall not be understood as an indication or implication of relative importance or implicit indication of the number, specific sequence or dominant-subordinate relationship of indicated technical features. In the descriptions of embodiments of the present disclosure, "a plurality of" means at least two unless otherwise specifically stated.

The "embodiment" mentioned in the specification means that particular features, structures, or characteristics described with reference to the embodiment may be included in at least one embodiment of the present disclosure. The appearance of this phrase anywhere in the specification does not necessarily refer to the same embodiment, or a separate or alternative embodiment that is mutually exclusive with other embodiments. It is explicitly and implicitly understood by those skilled in the art that the examples described herein may be combined with other examples.

In the descriptions of embodiments of the present disclosure, the term "and/or" describes only an association relationship for describing associated objects and represents that three relationships may exist. For example, A and/or B may represent the following three cases: A alone, both A and B, and B alone. In addition, the character "/" in this specification generally indicates an "or" relationship between the associated objects.

In the description according to the embodiments of the present disclosure, the directions or positional relationships indicated by the technical terms such as "length", "width", "thickness", "upper", "lower", "front", "rear", "left", "right", "vertical", "horizontal", "top", "bottom", "inside", "outside", and "circumferential", are only for the convenience of describing the embodiments of the present disclosure and simplifying the description, rather than indicating or implying that the involved device or element should have a specific orientation or should be configured, operated, or used in the specific orientation, therefore, they cannot be understood as limiting the embodiments of the present disclosure.

In the description of the embodiments of the present disclosure, unless otherwise explicitly specified and defined, the technical terms such as "install", "couple", "connect", and "fix" should be understood in a broad sense, for example, they may be a fixed connection, a detachable connection, or an integrated connection; may be a mechanical connection or an electric connection; or may be a mechanical connection or an electrical connection; or may be a direct connection, an indirect connection through an intermediate, or internal communication between two elements or an interaction relationship between two elements. A person of ordinary skill in the art can understand specific meanings of the terms in the embodiments of the present disclosure based on specific situations.

In the descriptions of the embodiments of the present disclosure, unless otherwise clearly specified and defined, the technical term "contact" should be understood in a broad sense, and may be direct contact, contact through an intermediate medium layer, contact with essentially no interaction force between the two in contact, or contact with an interaction force between the two in contact.

The present disclosure is described below in detail.

Currently, new energy batteries are increasingly widely used in life and industry. New energy batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. With continuously increasing application of the power batteries, the market demand is also constantly expanding. Therefore, the production of new energy batteries is increasingly important.

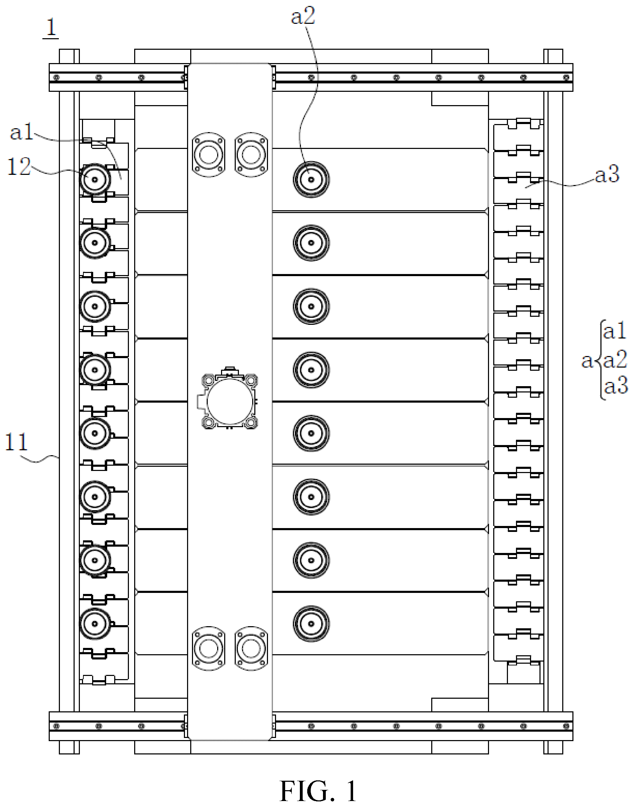

Based on this, the present disclosure provides a production line. The production line includes a weighing device, a loading conveyor and an unloading conveyor. Alternatively, as shown in FIG. 1, the production line includes a weighing system 1, a loading conveyor (not shown) and an unloading conveyor (not shown). The weighing system 1 includes a weighing device 11 and a workpiece 12. The weighing device 11 is configured to weigh the workpiece 12. The weighing device 11 includes an operation surface a. The operation surface a includes a loading station a1, a weighing station a2 and an unloading station a3. The to-be-weighed workpiece 12 enters the loading station a1 by using the loading conveyor and is weighed at the weighing station a2. The weighed workpiece 12 leaves the unloading station a3 by using the unloading conveyor.

The loading conveyor transports the to-be-weighed workpiece 12 to the loading station a1. The weighing device 11 weighs the workpiece 12 at the loading station a1. After the weighing is completed, the weighed workpiece 12 is further transported to the unloading station a3, so as to weigh the workpiece 12 and implement assembly-line production of the workpiece 12.

In some examples, the workpiece 12 includes a cell or an assembly including a cell.

Exemplarily, the cell may be a cylindrical cell, a cubic cell, or the like.

Exemplarily, the cell may be a secondary battery. The secondary battery refers to a cell of which an active material can be activated by means of charging for further use after the cell is discharged.

Exemplarily, the cell may be a lithium ion battery, a sodium ion battery, a sodium lithium ion battery, a lithium metal battery, a sodium metal battery, a lithium sulfur battery, a magnesium ion battery, a nickel hydrogen battery, a nickel cadmium battery, a lead storage battery, or the like, which is not limited in the embodiments of the present disclosure.

Certainly, the foregoing workpiece 12 may also include any other component that needs to be weighed. For ease of illustration of the accompanying drawings, the following accompanying drawings are illustrated in an example in which the workpiece 12 includes a cell or an assembly including a cell.

In some examples, the loading conveyor includes a loading conveyor belt. The workpiece 12 is conveyed to the loading station a1 by using the loading conveyor belt. For example, an upper surface of the loading conveyor belt and a plane of the loading station a1 may be coplanar, and the upper surface of the loading conveyor belt is connected to the loading station a1. In this way, the to-be-weighed workpiece 12 can enter the loading station a1 from the loading conveyor belt.

In some examples, the unloading conveyor includes an unloading conveyor belt. The workpiece 12 is conveyed to the unloading station a3 by using the unloading conveyor belt. For example, an upper surface of the unloading conveyor belt and a plane of the unloading station a3 may be coplanar, and the upper surface of the unloading conveyor belt is connected to the unloading station a3. In this way, the weighed workpiece 12 can leave the unloading station a3 by using the unloading conveyor belt.

In some examples, the loading conveyor is located on a side where the loading conveyor belt is located. The unloading conveyor is located on a side where the unloading conveyor belt is located. This facilitates overall layout of the production line.

In some examples, the loading station a1, the weighing station a2 and the unloading station a3 are sequentially arranged at intervals, so that a space can be provided in the arrangement direction of the loading station a1, the weighing station a2 and the unloading station a3 for the first translation assembly 113 and the gripping member 112.

In some examples, there may be one loading station a1 and one unloading station a3.

Alternatively, there may be a plurality of loading stations a1 and a plurality of unloading stations a3.

In some examples, one to-be-weighed workpiece 12 may be placed on one loading station a1. Alternatively, a plurality of to-be-weighed workpieces 12 may be placed on one loading station a1.

In some examples, one weighed workpiece 12 may be placed on one unloading station a3. Alternatively, a plurality of weighed workpieces 12 may be placed on one unloading station a3.

In some examples, the number of the weighing stations a2 should be greater than or equal to the number of the workpieces 12.

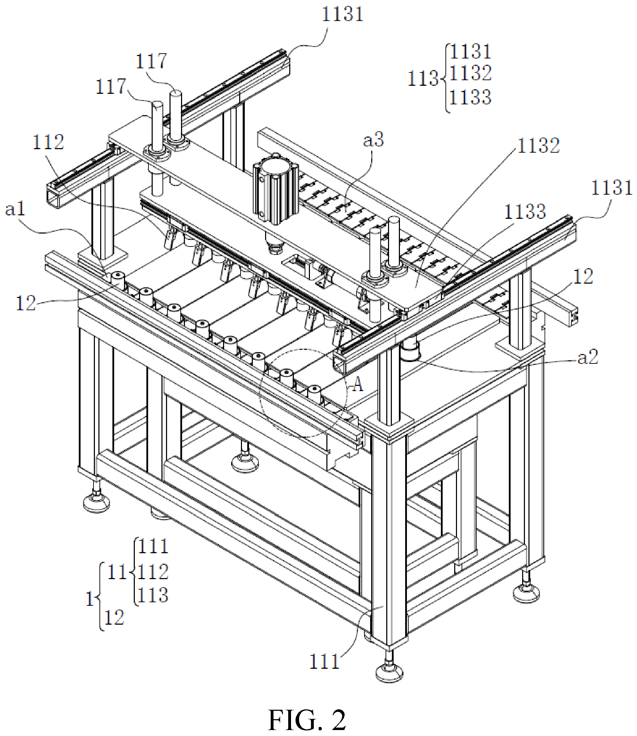

Based on this, as shown in FIG. 2, in some examples, the numbers of the loading stations a1, the unloading stations a3, the weighing stations a2 and the workpieces 12 are each plural and are the same. One to-be-weighed workpiece 12 is placed on one loading station a1, and one weighed workpiece 12 is placed on one unloading station a3.

An arrangement direction of the plurality of loading stations a1, an arrangement direction of the plurality of weighing stations a2 and an arrangement direction of the plurality of unloading stations a3 may be parallel to each other or coincide with each other.

In the related art, to weigh the workpiece 12 by using the weighing device 11, the weighing device 11 typically includes an electronic scale and a gripper that can move up and down and translate. The gripper picks up the workpiece 12 at the loading station a1, moves up, translates to above the electronic scale, moves down, and places the workpiece 12 on the electronic scale for weighing. After the weighing is completed, the gripper picks up the workpiece 12 again, moves up, translates the workpiece 12 to the unloading station a3, moves down, and then releases the workpiece 12, thereby completing weighing of the workpiece 12.

Because the gripper needs to move up and down at the electronic scale, which involve excessive actions, resulting in slow cycle and low weighing efficiency in the entire weighing process.

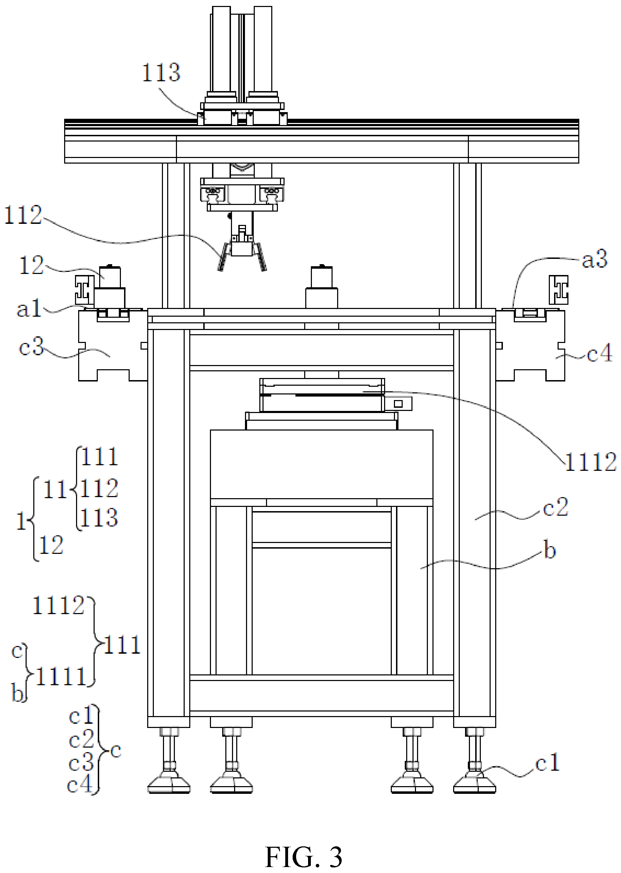

Based on this, as shown in FIG. 2 and FIG. 3, some embodiments of the present disclosure provide a weighing device 11. The weighing device 11 is configured to weigh workpieces 12. The weighing device 11 includes a weighing assembly 111, a gripping member 112 and a first translation assembly 113. The weighing assembly 111 includes an operation surface a. The operation surface a includes a loading station a1, a weighing station a2 and an unloading station a3 which are arranged in sequence. The weighing station a2 is configured to weigh the workpieces 12. The gripping member 112 is arranged above the operation surface a, is capable of translating in a plane parallel to the operation surface a and is capable of passing above the loading station a1, the weighing station a2 and the unloading station a3. The gripping member 112 is configured to grip or release the workpieces 12. The first translation assembly 113 is arranged on the weighing assembly 111 and configured to drive the gripping member 112 to translate.

By means of the foregoing arrangement, to weigh the workpiece 12, the first translation assembly 113 drives the gripping member 112 to translate to the loading station a1, grips the to-be-weighed workpiece 12 at the loading station a1, then translates to above the weighing station a2 and releases the workpiece 12. In this case, the weighing station a2 weighs the workpiece 12. After the weighing is completed, the gripping member 112 grips the workpiece 12 again, continues to translate to the unloading station a3 and releases the workpiece 12. In this way, the workpiece 12 is weighed.

In the entire weighing process, the gripping member 112 only translates between the loading station a1, the weighing station a2 and the unloading station a3. Therefore, the entire weighing process involves simple movements and fast beat, thereby improving the weighing efficiency.

In some examples, as shown in FIG. 3, the weighing assembly 111 includes a frame 1111 and a weighing portion 1112. The loading station a1 and the unloading station a3 are both located on the frame 1111. The weighing portion 1112 is arranged in the frame 1111. The weighing station a2 is located on the weighing portion 1112.

By means of the foregoing arrangement, because the periphery of the frame 1111 is hollow, the weighing portion 1112 is arranged in the frame 1111. When an operation such as maintenance or replacement needs to be performed on the weighing portion 1112, the operation such as maintenance or replacement may be performed on the weighing portion 1112 by using the hollow structure of the periphery of the frame 1111, thereby facilitating operations.

Exemplarily, there are a plurality of weighing portions 1112, and there are a plurality of weighing stations a2. The weighing portions 1112 and the weighing stations a2 are in a one-to-one correspondence.

Exemplarily, the weighing portion 1112 includes an electronic scale, a platform scale or the like.

Exemplarily, as shown in FIG. 3, the frame 1111 includes an inner support frame b and an outer support frame c. The inner support frame b is arranged in the outer support frame c. The weighing portions 1112 are arranged at an upper part of the inner support frame b. The inner support frame b provides support for the weighing portions 1112.

As shown in FIG. 3, the outer support frame c includes a plurality of first legs c1, a main body c2, a first conveyor belt c3 and a second conveyor belt c4. The plurality of first legs c1 are arranged at a bottom of the main body c2 and provide support for the main body c2. The first conveyor belt c3 and the second conveyor belt c4 are located on two opposite sides of the main body c2 and respectively connected to the main body c2. The loading station a1 is located on an upper surface of the first conveyor belt c3. The unloading station a3 is located on an upper surface of the second conveyor belt c4. In this way, the loading conveyor belt can cooperate with the first conveyor belt c3 so as to better implement loading of the workpieces 12. The unloading conveyor belt can cooperate with the second conveyor belt c4 so as to better implement unloading of the workpieces 12.

In addition, a bottom of the inner support frame b has a plurality of second legs. The plurality of second legs provide support for the inner support frame b.

During actual arrangement, the first conveyor belt c3 and the loading conveyor belt may also be provided as an integral structure. The second conveyor belt c4 and the unloading conveyor belt may be provided as an integral structure.

In some examples, as shown in FIG. 2, a translation direction of the gripping member 112 is consistent with an arrangement direction of the loading station a1, the weighing station a2 and the unloading station a3. Thereby, during translation, the gripping member 112 may translate, along a linear direction, from the loading station a1 to the weighing station a2 and then to the unloading station a3. In this way, the translation route can be further shortened, thereby further accelerating the weighing cycle and improving the weighing efficiency.

Certainly, the translation direction of the gripping member 112 may also form an acute angle with the arrangement direction of the loading station a1, the weighing station a2 and the unloading station a3. Alternatively, the gripping member 112 may translate along an irregular route, provided that it can pass above the loading station a1, above the weighing station a2 and above the unloading station a3.

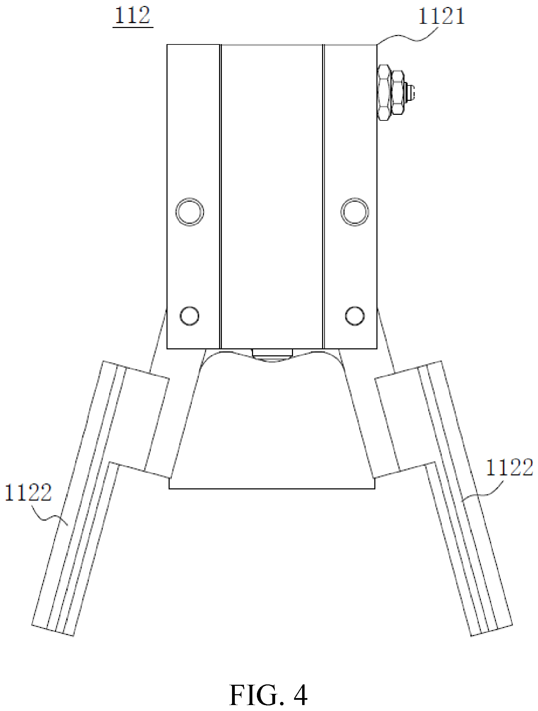

In some examples, as shown in FIG. 4, the gripping member 112 includes an angle cylinder 1121 and two clamping plates 1122. The first translation assembly 113 is configured to drive the angle cylinder 1121 to translate. The two clamping plates 1122 are connected to the angle cylinder 1121. The angle cylinder 1121 is configured to drive the two clamping plates 1122 to open at a suitable angle to clamp or release the workpiece 12.

An arrangement direction of the two clamping plates 1122 and a translation direction of the angle cylinder 1121 form an included angle. For example, the included angle between the arrangement direction of the two clamping plates 1122 and the translation direction of the angle cylinder 1121 is 0°, 20°, 30°, 40°, 70° or 90°.

In the process of the gripping member 112 gripping the workpiece 12 to translate, because no upward movement or downward movement of the workpiece 12 is involved, the bottom of the workpiece 12 is in contact with the operation surface a. Therefore, the workpiece 12 needs to be protected. In some examples, the smoothness of the operation surface a may be improved. In this way, a friction force between the workpiece 12 and the operation surface a can be reduced as much as possible, and the wear of the workpiece 12 can be reduced.

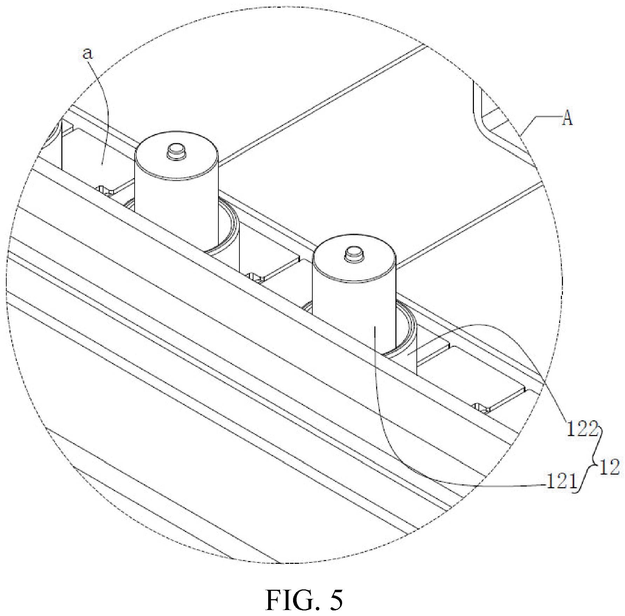

In some embodiments, as shown in FIG. 5, the workpiece 12 includes a body 121 and a protection member 122. The protection member 122 is at least partially located between a bottom of the body 121 and the operation surface a. The protection member 122 is in contact with the operation surface a during translation of the workpiece 12.

By providing the protection member 122 at the bottom of the workpiece 12, during translation, the protection member 122 can protect the body 121, so as to prevent the body 121 from directly contacting the operation surface a, thereby preventing the body 121 from damage.

It can be understood that the protection member 122 is a component having a fixed weight. In this way, when only the weight of the body 121 needs to be obtained, the weight of the body 121 can be obtained by subtracting the weight of the protection member 122 from the weight of the workpiece 12.

Based on this, it should be noted that the weight of the protection member 122 should be set as small as possible. In this way, the weighing range of the weighing assembly 111 does not increase excessively due to an increase of the weight of the protection member 122. Because the weighing range of the weighing assembly 111 is inversely proportional to the weighing precision and the weighing response speed of the weighing assembly 111, this can ensure, to the greatest extent, that the weighing precision and the weighing response speed of the weighing assembly 111 do not decrease excessively. Thereby, by setting the weight of the protection member 122 smaller, the weighing precision and the weighing response speed of the weighing assembly 111 can be ensured to the greatest extend on the premise of protecting the protection body 121 from damage.

In addition, it can be understood that in this case, the workpiece 12 may be an assembly including a cell. The body 121 includes the cell, and the cell is protected by using the protection member 122.

In some examples, the protection member 122 may be fixedly connected to the body 121. For example, the two may be fixed in any suitable manner such as soldering or gluing.

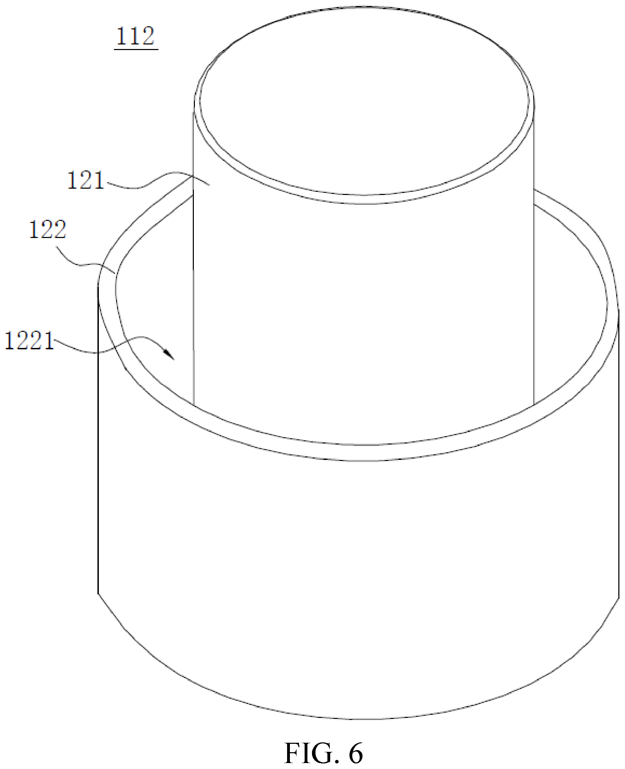

Alternatively, in some examples, as shown in FIG. 5 and FIG. 6, the protection member 122 has a recess 1221. An opening of the recess 1221 faces a side away from the operation surface a. A part of the body 121 extends into the recess 1221. The part of the body 121 forms a clearance fit with a peripheral wall surface of the recess 1221.

In this way, when the body 121 needs to be protected by using the protection member 122, it is simply required to place the body 121 in the recess 1221, and when the body 121 needs to be separated from the protection member 122, it is simply required to remove the body 121 from the recess 1221. Through the clearance fit between the body 121 and the recess 1221, it is convenient for actual operations.

It can be understood that when the gripping member 112 is to grip the workpiece 12, the gripping member 112 may grip either the body 121 or the protection member 122.

The protection member 122 may be of a cylindrical, cubic or irregular-shaped structure.

In addition, an extension direction of the recess 1221 may be perpendicular to a plane of the operation surface a. In this way, the body 121 can be more stably placed in the recess 1221.

After the weighing device 11 is used for a period of time, the weighing precision of the weighing assembly 111 decreases. Therefore, the weighing assembly 111 needs to be calibrated.

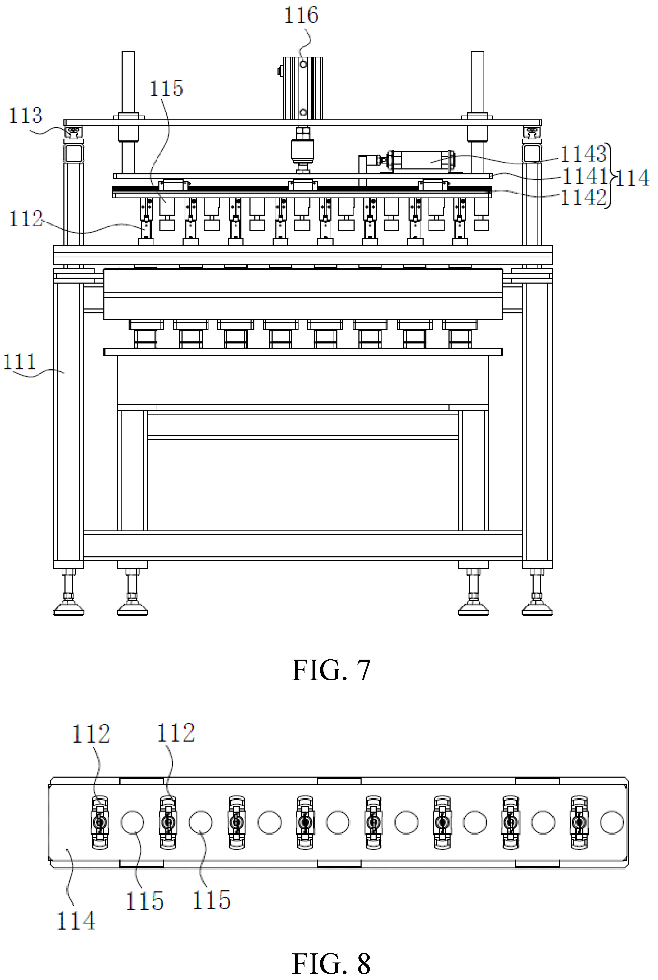

In some embodiments, as shown in FIG. 7, the weighing device 11 includes a second translation assembly 114 and a calibration member 115. The second translation assembly 114 is connected to both the first translation assembly 113 and the gripping member 112. The calibration member 115 is connected to the second translation assembly 114. In the plane parallel to the operation surface a, the second translation assembly 114 is configured to drive the calibration member 115 and the gripping member 112 to translate such that the calibration member 115 or the gripping member 112 is aligned with the weighing station a2.

It can be understood that the second translation assembly 114 may be connected to the first translation assembly 113, the gripping member 112 and the calibration member 115 directly or indirectly.

In addition, that the calibration member 115 is aligned with the weighing station a2 means that a projection of the calibration member 115 on the operation surface a at least partially overlaps with the weighing station a2. Similarly, that the gripping member 112 is aligned with the weighing station a2 means that a projection of the gripping member 112 on the operation surface a at least partially overlaps with the weighing station a2.

The second translation assembly 114 is used to connect both the gripping member 112 and the calibration member 115 to the first translation assembly 113. In this way, the second translation assembly 114, the calibration member 115 and the gripping member 112 can all be driven by the first translation assembly 113 to translate, and the second translation assembly 114 can drive the calibration member 115 and the gripping member 112 to translate. When the gripping member 112 is aligned with the weighing station a2, the workpiece 12 on the gripping member 112 can be in contact with the weighing station a2. In this way, the workpiece 12 can be weighed. When the calibration member 115 is aligned with the weighing station a2, the calibration member 115 can be in contact with the weighing station a2, so as to calibrate the weighing station a2.

The calibration member 115 adds a calibration function to the weighing device 11, thereby facilitating calibration of the weighing station a2.

Based on this, in some embodiments, as shown in FIG. 7 and FIG. 8, there are a plurality of weighing stations a2, a plurality of gripping members 112 and a plurality of calibration members 115. The plurality of workpieces 12 and the plurality of calibration members 115 are all connected to the second translation assembly 114 and are alternately arranged along a translation direction of the second translation assembly 114.

By providing the plurality of gripping members 112 and the plurality of weighing stations a2, the plurality of workpieces 12 can be weighed at the same time, thereby improving the weighing efficiency. In addition, the plurality of calibration members 115 are arranged to calibrate the plurality of weighing stations a2 at the same time, thereby improving the calibration efficiency.

The numbers of the weighing stations a2, the gripping members 112 and the calibration members 115 may each be two, three, four, five, six, seven or eight, which may be specifically set according to requirements.

Certainly, the numbers of the weighing stations a2, the gripping members 112, and the calibration members 115 may each be one.

In some embodiments, as shown in FIG. 7, the translation direction of the second translation assembly 114 is perpendicular to the arrangement direction (the direction perpendicular to the plane of the drawing in FIG. 7) of the loading station a1, the weighing station a2 and the unloading station a3. In this way, a space between the loading station a1 and the unloading station a3 can be reduced, and a size of the weighing device 11 in the direction of the loading station a1 and the unloading is a3 can be reduced, thereby improving the space utilization.

Certainly, the translation direction of the second translation assembly 114 may be consistent with or form an acute angle with an arrangement direction of the loading station a1, the weighing station a2 and the unloading station a3.

To facilitate using the second translation assembly 114 to drive the gripping member 112 and the calibration member 115 to translate, as shown in FIG. 7, in some embodiments of the present disclosure, the second translation assembly 114 includes a first adapter plate 1141, a second adapter plate 1142 and a first drive portion 1143. The first adapter plate 1141 is connected to the first translation assembly 113. The second adapter plate 1142 is arranged between the first adapter plate 1141 and the operation surface a and connected to both the calibration member 115 and the gripping member 112. The first drive portion 1143 is connected to the first adapter plate 1141 and the second adapter plate 1142 and configured to drive the second adapter plate 1142 to translate in the plane parallel to the operation surface a to make the calibration member 115 or the gripping member 112 aligned with the weighing station a2.

Because the first drive portion 1143 is connected to the first adapter plate 1141 and the second adapter plate 1142 respectively , the first adapter plate 1141, the second adapter plate 1142 and the first drive portion 1143 form a whole. Because the first adapter plate 1141 is connected to the first translation assembly 113, the first translation assembly 113 can drive the first adapter plate 1141, the first adapter plate 1141 and the first drive portion 1143 to translate. Because both the calibration member 115 and the gripping member 112 are connected to the second adapter plate 1142, both the calibration member 115 and the gripping member 112 can translate in the plane parallel to the operation surface a.

Because the second adapter plate 1142 has a large mounting area, the gripping member 112 can be connected to the calibration member 115 conveniently, thereby facilitating structural arrangement.

In some examples, the first drive portion 1143 includes a cylinder. A telescoping direction of a piston rod of the cylinder is parallel to the plane of the operation surface a. A cylinder block of the cylinder is connected to the first adapter plate 1141, and the piston rod of the cylinder is connected to the second adapter plate 1142.

Alternatively, the first drive portion 1143 may also include a linear actuator. An output shaft of the linear actuator is parallel to the plane of the operation surface a. A housing of the linear actuator is connected to the first adapter plate 1141. An output shaft of the linear actuator is connected to the second adapter plate 1142.

In some examples, the first drive portion 1143 may be arranged on a side of the first adapter plate 1141 away from the second adapter plate 1142, the first adapter plate 1141 is provided with a communication hole, and an output shaft of the first drive portion 1143 is connected to an upper surface of the second adapter plate 1142 through the communication hole, so as to drive the second adapter plate 1142 to translate.

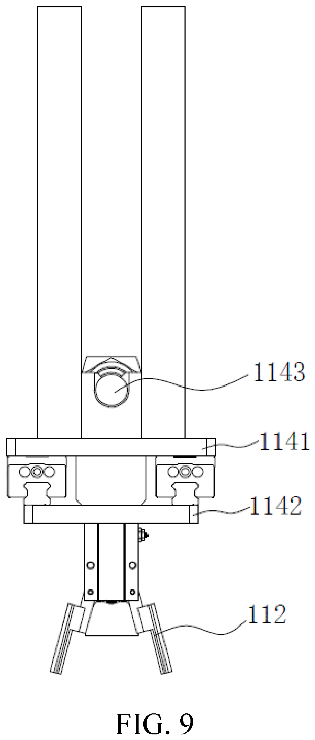

Based on this, in some embodiments, as shown in FIG. 7 and FIG. 9, in an arrangement direction of the gripping member 112 and the calibration member 115, the first adapter plate 1141 is slidably connected to the second adapter plate 1142. The slidable connection between the first adapter plate 1141 and the second adapter plate 1142 improves the connection strength between the first adapter plate 1141 and the second adapter plate 1142 and the structural stability on the basis that the first adapter plate 1141 and the second adapter plate 1142 can translate relative to each other.

Exemplarily, the first adapter plate 1141 and the second adapter plate 1142 may be slidably connected by a fit between a rail and a slider.

In a case that the gripping member 112 includes the angle cylinder 1121 and the two clamping plates 1122 and the two clamping plates 1122 are arranged along the translation direction, when the gripping member 112 grips or releases the workpiece 12, for ease of setting of a program, an opening angle and a closing angle of the gripping member 112 are typically fixed. To ensure that the gripping member 112 can grip the workpiece 12 securely, after the two clamping plates 1122 clamp the workpiece 12, along a height direction (the direction perpendicular to the operation surface a) of the workpiece 12, a length of the clamping plates 1122 needs to be as large as possible. In this way, the workpiece 12 can be gripped more tightly. However, in this way, when the two clamping plates 1122 open, in the direction perpendicular to the operation surface a, the clamping plates 1122 overlap the workpiece 12.

The to-be-weighed workpiece 12 reaches the loading station a1 earlier than the gripping member 112 to prepare for gripping by the gripping member 112. Therefore, when the gripping member 112 translates back to the loading station a1, the clamping plates 1122 may collide with the workpiece 12 at the loading station a1.

Based on this, as shown in FIG. 7, in some embodiments of the present disclosure, the weighing device 11 further includes a lifting assembly 116. The lifting assembly 116 is connected to both the first translation assembly 113 and the second translation assembly 114 to make the second translation assembly 114 connected to the first translation assembly 113, and is configured to drive the second translation assembly 114 to move up and down.

By providing the lifting assembly 116, the lifting assembly 116 can move with the first translation assembly 113. The lifting assembly 116 can also drive the second translation assembly 114 to move up and down. Because the gripping member 112 is connected to the second translation assembly 114, the gripping member 112 can move up and down. Therefore, the gripping member 112 can move up and down and translate.

In this way, when the gripping member 112 places the weighed workpiece 12 to the unloading station a3 and proceeds to a next weighing operation, the lifting assembly 116 can drive the second translation assembly 114 to move up, so as to drive the gripping member 112 to move up. Then the first translation assembly 113 translates the gripping member 112 to above the loading station a1. In this way, even if there is the workpiece 12 at the loading station a1, collision between the gripping member 112 and the workpiece 12 at the loading station a1 can be avoided.

It can be understood that when the second translation assembly 114 includes the first adapter plate 1141, the second adapter plate 1142 and the first drive portion 1143, for ease of structural arrangement, the lifting assembly 116 may be fixedly connected to an upper surface of the first adapter plate 1141.

The lifting assembly 116 may include a cylinder or a lifting motor.

In some examples, as shown in FIG. 7, a lifting direction of the second translation assembly 114 is perpendicular to the plane of the operation surface a. In this way, the lifting distance of the gripping member 112 is shortest, so that the weighing cycle can be accelerated, and the weighing efficiency can be improved.

Certainly, the lifting direction of the second translation assembly 114 may alternatively form an acute angle with the plane of the operation surface a.

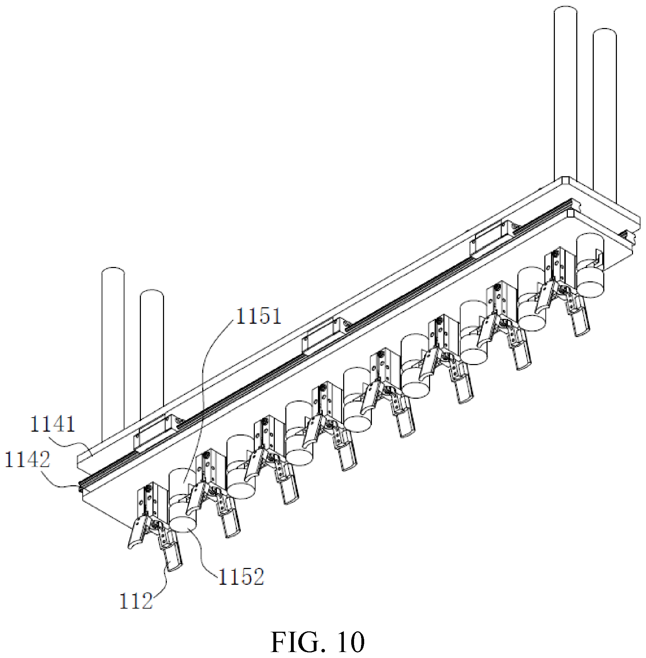

Based on this, to calibrate the weighing portion 1112 by using the calibration member 115, in some embodiments, as shown in FIG. 10, FIG. 11 and FIG. 12, the calibration member 115 includes a connection portion 1151 and a standard portion 1152. The connection portion 1151 is connected to the second translation assembly 114. The connection portion 1151 has a sliding space extending along the lifting direction of the second translation assembly 114. The standard portion 1152 is partially located in the sliding space and is slidable along an extension direction of the sliding space. The standard portion 1152 is alignable with the weighing station a2.

Because the standard is also arranged on the second translation assembly 114, the standard can also move up and down with the second translation assembly 114. Because the standard portion 1152 is slidable along the sliding space, during the calibration of the weighing station a2, the standard portion 1152 is first made aligned with the weighing station a2. Then the standard portion 1152 is moved down. When the standard portion 1152 is in contact with the weighing station a2, the weighing station a2 provides a support force for the standard portion 1152, so that the standard portion 1152 slides away from the operation surface a. In this case, no force is generated between the standard portion 1152 and the connection portion 1151 in the extension direction of the sliding space, and only the weight of the standard portion 1152 rests on the weighing station a2. Thereby, the weighing station a2 is calibrated by using the standard portion 1152.

After the calibration is completed, the standard portion 1152 is moved up. When the standard portion 1152 is separated from the weighing station a2, the standard portion 1152 moves down. Because the standard portion 1152 is partially located in the sliding space, after the standard portion 1152 moves down to some extent, the connection portion 1151 provides a constraint for the standard portion 1152, so as to prevent the standard portion 1152 from completely sliding out of the sliding space. In the entire calibration process, the operation is simple, and the calibration precision is not affected.

It can be understood that when the second translation assembly 114 includes the first adapter plate 1141, the second adapter plate 1142 and the first drive portion 1143, the connection portion 1151 should be connected to the second adapter plate 1142.

In addition, the standard portion 1152 may be a standard weight.

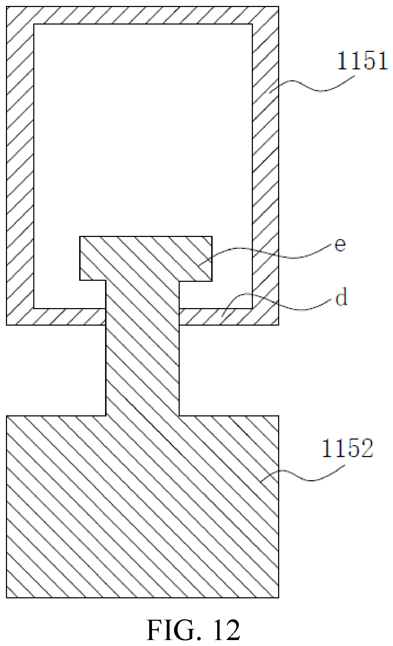

In some examples, as shown in FIG. 12, an inner wall of the sliding space has a first abutting portion d. A part of the standard portion 1152 that extends into the sliding space has a second abutting portion e. When the standard portion 1152 is separated from the weighing station a2, an upper surface of the first abutting portion d abuts against a lower surface of the second abutting portion e, so that the standard portion 1152 is partially located in the sliding space, and thus, the standard portion 1152 is suspended on the connection portion 1151. When the standard portion 1152 is in contact with the weighing station a2 and the connection portion 1151 continues to move down toward the weighing station a2, the weight of the weighing portion 1112 rests on the weighing station a2, and the weighing station a2 provides an upward support for the standard portion 1152. In this way, the first abutting portion d is separated from the second abutting portion e, and thus, only the weight of the standard portion 1152 rests on the weighing station a2, thereby calibrating the weighing station a2 by using the standard portion 1152. This makes the structure simple. When calibration is not needed, the connection portion 1151 can be used to suspend the standard portion 1152. When calibration is needed, the connection portion 1151 does not apply a force to the standard portion 1152, so that the calibration result can be ensured.

In the present disclosure, not only the lifting assembly 116, but also the second translation assembly 114 is arranged. To translate the lifting assembly 116 and the second translation assembly 114 by using the first translation assembly 113, as shown in FIG. 2, the first translation assembly 113 in some embodiments of the present disclosure includes a slide rail 1131, a translation portion 1132 and a second drive portion 1133. The slide rail 1131 is connected to the weighing assembly 111. An extension direction of the slide rail 1131 is consistent with the translation direction of the gripping member 112. The translation portion 1132 is located above the operation surface a, forms a sliding fit with the slide rail 1131, and is connected to the lifting assembly 116. The second drive portion 1133 is configured to drive the translation portion 1132 to slide.

In this way, the fit between the slide rail 1131 and the translation portion 1132 can be used to implement translation, and the second drive portion 1133 can be used to provide translation power. This facilitates connection and arrangement of the lifting assembly 116 and improves the structural stability of the overall device.

In some examples, the translation portion 1132 may include a plate-shaped structure, a block-shaped structure or an irregular shape.

In some examples, the second drive portion 1133 may include a motor.

In some examples, the slide rail 1131 is arranged above the operation surface a, and the second translation portion 1132, the gripping member 112 and the calibration member 115 are all located between the translation portion 1132 and the operation surface a.

In some examples, as shown in FIG. 2, there are two slide rails 1131. The two slide rails 1131 are arranged at an interval on two sides of the translation portion 1132 along the translation direction. The translation portion 1132 forms a sliding fit with the two slide rails 1131. In this way, sliding stability of the translation portion 1132 can be improved.

Based on this, as shown in FIG. 2, to facilitate the upward or downward movement of the second translation assembly 114 by the lifting assembly 116, the weighing device 11 in some embodiments of the present disclosure further includes a guide rod 117. The guide rod 117 extends along the lifting direction of the lifting assembly 116. The guide rod 117 forms a sliding fit with the translation portion 1132 and is connected to the second translation assembly 114. In this way, the guide rod 117 functions to guide the upward or downward movement of the second translation assembly 114, which can improve the stability of the upward or downward movement of the second translation assembly 114.

There may be one, two, three or four guide rods 117, which may be specifically set according to requirements.

Exemplarily, there are four guide rods 117. The translation portion 1132 is a rectangular plate. The four guide rods 117 are respectively arranged at four corners of the translation portion 1132.

When the second translation assembly 114 includes the first adapter plate 1141, the second adapter plate 1142 and the first drive portion 1143, the guide rods 117 are connected to the first adapter plate 1141. This can facilitate the arrangement of the guide rods 117.

To understand the weighing and calibration process of the weighing device 11 in the present disclosure more clearly, the following describes, in a specific embodiment, the working process of the weighing device 11.

In a weighing mode, as shown in FIG. 2, first, the gripping member 112 is located above the loading station a1, and the lifting assembly 116 drives the second translation assembly 114 to move down, so that the gripping member 112 grips the workpiece 12 at the loading station a1. Then, the first translation assembly 113 is started to drive the gripping member 112 to translate to the weighing station a2. The gripping member 112 releases the workpiece 12, and the weighing station a2 weighs the gripping member 112. After the weighing is completed, the gripping member 112 grips the workpiece 12 and continues to translate to the unloading station a3. Then, the gripping member 112 releases the workpiece 12, so that the workpiece 12 is weighed.

Next, the lifting assembly 116 drives the gripping member 112 to move up, and then the first translation assembly 113 drives the gripping member 112 to return to the loading station a1. This cycle repeats continuously to weigh the workpieces 12.

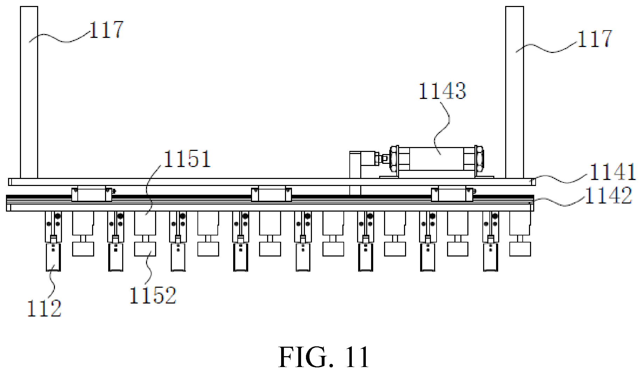

In a calibration mode, as shown in FIG. 2 and FIG. 11, first, the gripping member 112 is translated to above the weighing station a2, and then, the second translation assembly 114 is started, so that the standard portion 1152 is aligned with the weighing station a2. Then, the lifting assembly 116 drives the standard portion 1152 to move down, so that the standard portion 1152 is in contact with the weighing station a2, thereby calibrating the weighing station a2.

After the calibration is completed, the lifting assembly 116 drives the standard portion 1152 to move up, and then the second translation assembly 114 may be started, so that the gripping member 112 can be aligned with the weighing station a2, thereby switching the calibration mode to the weighing mode.

The above embodiments are merely intended for describing the technical solutions of the present disclosure rather than limiting the present disclosure. Although the present disclosure is described in detail with reference to the foregoing embodiments, a person of ordinary skill in the art shall understand that, modifications may still be made to the technical solutions in the foregoing embodiments, or equivalent replacements may be made to some or all of the technical features. These modifications or replacements do not make the essence of the corresponding technical solutions detract from the scope of the technical solutions of the embodiments of the present invention, and are intended to be included within the scope of the present disclosure. Especially, provided that there is no structural conflict, the various technical features mentioned in each embodiment can be combined in any way. The present disclosure is not limited to the specific embodiments disclosed in the present disclosure, but includes all technical solutions falling within the scope of the present disclosure.

## Claims

1. A weighing device, configured to weigh workpieces, the weighing device comprising:
a weighing assembly, comprising an operation surface, the operation surface comprising a loading station, a weighing station and an unloading station which are arranged in sequence, the weighing assembly comprising a frame and a weighing portion, the loading station and the unloading station being located on the frame, the weighing portion being arranged in the frame, the weighing station being located on the weighing portion, and the weighing station being configured to weigh the workpieces;
a gripping member, arranged above the operation surface, capable of translating in a plane parallel to the operation surface and capable of passing above the loading station, the weighing station and the unloading station, and the gripping member being configured to grip or release the workpieces; and
a first translation assembly, arranged on the weighing assembly and configured to drive the gripping member to translate.

2. The weighing device according to claim 1, wherein a translation direction of the gripping member is consistent with an arrangement direction of the loading station, the weighing station and the unloading station.

3. The weighing device according to claim 1 or 2, further comprising:
a second translation assembly, connected to both the first translation assembly and the gripping member; and
a calibration member, connected to the second translation assembly, wherein in the plane parallel to the operation surface, the second translation assembly is configured to drive the calibration member and the gripping member to translate such that the calibration member or the gripping member is aligned with the weighing station.

4. The weighing device according to claim 3, wherein a plurality of weighing stations, a plurality of gripping members and a plurality of calibration members are provided, and the plurality of workpieces and the plurality of calibration members are all connected to the second translation assembly and are alternately arranged along a translation direction of the second translation assembly.

5. The weighing device according to claim 3 or 4, wherein the translation direction of the second translation assembly is perpendicular to the arrangement direction of the loading station, the weighing station and the unloading station.

6. The weighing device according to any one of claims 3 to 5, further comprising:
a lifting assembly, connected to both the first translation assembly and the second translation assembly to make the second translation assembly connected to the first translation assembly, and is configured to drive the second translation assembly to move up and down.

7. The weighing device according to claim 6, wherein a lifting direction of the second translation assembly is perpendicular to a plane of the operation surface.

8. The weighing device according to claim 6 or 7, wherein the calibration member comprises:
a connection portion, connected to the second translation assembly, the connection portion having a sliding space extending along the lifting direction of the second translation assembly; and
a standard portion, partially located in the sliding space and slidable along an extension direction of the sliding space, wherein the standard portion is alignable with the weighing station.

9. The weighing device according to claim 8, wherein an inner wall of the sliding space has a first abutting portion, and a part of the standard portion that extends into the sliding space has a second abutting portion, an upper surface of the first abutting portion being capable of abutting against or separating from a lower surface of the second abutting portion.

10. The weighing device according to any one of claims 3 to 9, wherein the second translation assembly comprises:
a first adapter plate, connected to the first translation assembly;
a second adapter plate, arranged between the first adapter plate and the operation surface and connected to both the calibration member and the gripping member; and
a first drive portion, connected to the first adapter plate and the second adapter plate and configured to drive the second adapter plate to translate in the plane parallel to the operation surface to make the calibration member or the gripping member aligned with the weighing station.

11. The weighing device according to claim 10, wherein in an arrangement direction of the gripping member and the calibration member, the first adapter plate is slidably connected to the second adapter plate.

12. The weighing device according to claim 10 or 11, wherein the first adapter plate is provided with a communication hole, the first drive portion is arranged on a side of the first adapter plate away from the second adapter plate, and an output shaft of the first drive portion is connected to an upper surface of the second adapter plate through the communication hole, so as to drive the second adapter plate to translate.

13. The weighing device according to any one of claims 6 to 9, wherein the first translation assembly comprises:
a slide rail, connected to the weighing assembly, an extension direction of the slide rail being consistent with the translation direction of the gripping member;
a translation portion, located above the operation surface, forming a sliding fit with the slide rail, and connected to the lifting assembly; and
a second drive portion, configured to drive the translation portion to slide.

14. The weighing device according to any one of claims 1 to 13, wherein the gripping member comprises:
an angle cylinder, the first translation assembly being configured to drive the angle cylinder to translate; and
two clamping plates, connected to the angle cylinder, the angle cylinder being configured to drive the two clamping plates to open at a suitable angle to clamp or release the workpiece.

15. The weighing device according to any one of claims 1 to 14, wherein the frame comprises an inner support frame and an outer support frame, the inner support being arranged in the outer support frame, and the weighing portion being arranged at an upper part of the inner support frame.

16. A weighing system, comprising:
the weighing device according to any one of claims 1 to 15; and
a workpiece, comprising a body and a protection member, the protection member being at least partially located between a bottom of the body and an operation surface, and the protection member being in contact with the operation surface during translation of the workpiece.

17. The weighing system according to claim 16, wherein the protection member has a recess, an opening of the recess facing a side away from the operation surface, a part of the body extending into the recess, and the part of the body forming a clearance fit with a peripheral wall surface of the recess.

18. The weighing system according to claim 17, wherein an extension direction of the recess is perpendicular to a plane of the operation surface.

19. A production line, comprising:
the weighing device according to any one of claims 1 to 15, or the weighing system according to any one of claims 16 to 18;
a loading conveyor, a to-be-weighed workpiece entering the loading station by using the loading conveyor; and
an unloading conveyor, the weighed workpiece leaving the unloading station by using the unloading conveyor.
